# FASCICULE DE BREVET EUROPEEN

(11) **EP 1 544 104 B1**
(45) Date de publication et mention de la délivrance du brevet: **24.05.2006**
(21) Numéro de dépôt: 04300815.0
(22) Date de dépôt: 25.11.2004
(51) Int. Cl.: B64D 7/00

(54) **Nez d'avion avec bouclier**
Flugzeugnase mit Schutzschild
Aircraft nose with shield

(30) Priorité: 19.12.2003 FR 0351152
(43) Date de publication de la demande: 22.06.2005
(73) Titulaire: AIRBUS France, 31060 Toulouse Cedex 03 (FR)
(72) Inventeur: Dazet, Francis, 31140, Saint Alban (FR); Maurens, Noel, 32430, Encausse (FR)
(74) Mandataire: Schmit, Christian Norbert Marie

(56) Documents cités:
- GB-A- 555 700
- GB-A- 1 008 551
- US-A- 5 747 721
- US-A1- 2002 134 887

## Description

La présente invention a pour objet un nez d'avion comportant un bouclier de protection. Ce bouclier de protection est situé entre une cabine, où sont situés les pilotes d'une part, et un radôme en avant de l'avion où sont situés certains équipements de détection tels que des antennes radars d'autre part.

L'invention a pour but, pour des grands avions, de protéger efficacement une cabine, un habitacle ou bien même un compartiment critique de l'avion, de projections frontales à grande vitesse. De telles projections résultent essentiellement de la percussion de volatiles sur l'avant de l'avion. A grande vitesse, le radôme situé à l'avant de l'avion est perforé dans sa partie centrale par le projectile rencontré, les équipements internes du radôme sont détruits et le projectile continue sa course jusque dans le compartiment où se tiennent le ou les pilotes. Ceux-ci peuvent être alors gravement blessés. Eventuellement, dans une zone située sous le plancher de la cabine, en regard de la soute, dans un compartiment critique de l'avion, d'autres équipements sont présents qui pourraient être endommagés par ce choc. Lorsque le volatile atteint l'avion un peu sur le côté du nez, l'inclinaison du fuselage à cet endroit permet d'éviter la perforation.

Pour éviter de tels accidents, il est prévu d'interposer un bouclier entre la cabine où se tient le pilote ou bien le compartiment critique de l'avion, et le radôme de l'avion placé à l'avant de l'avion.

Les constitutions connues des boucliers sont telles que ces boucliers sont réalisés sous forme de panneaux assemblés qui se côtoient les uns les autres. En effet, à haute altitude, la pression atmosphérique est faible. Pour éviter que les passagers de l'avion ne manquent d'air, la cabine est étanche et est, du fait de la très faible pression extérieure, considérée comme pressurisée. Dans ces conditions, les structures de l'avion sont soumises à des forces de pression interne ayant un effet similaire à un gonflement. Ce gonflement se produit partout dans l'avion, et notamment à l'avant de l'avion, sur une ossature avant de cabine qui porte le bouclier. Cette ossature, au départ plane, se déforme. On tire alors parti de la structure du bouclier sous forme de panneaux pour s'adapter à cette déformation tout en conservant les qualités d'étanchéité et de protection du bouclier.

Cependant, pour les grands avions, le bouclier doit remplir d'autres fonctions. Notamment, il doit être léger et résistant, et par ailleurs se prêter facilement à un montage et un démontage lors des entretiens de l'avion. La norme prévoit que le bouclier doit résister à des tirs de volatiles de poids égal à 4 livres et lancés à une vitesse de 180 m/seconde. De ce point de vue, la solution à panneaux multiples s'avère moins efficace et moins pratique à mettre en oeuvre qu'un panneau rigide et résistant. On est donc confronté au problème suivant, celui de réaliser un panneau rigide et résistant de grande dimension à monter sur une structure elle-même déformable.

Dans l'invention, on a alors eu l'idée de réaliser un tel panneau monobloc rigide et résistant et de le monter flottant sur l'ossature avant de l'avion. Le flottement est tel que, à l'arrêt, lorsque l'avion ne vole pas et que les pressions sont équilibrées de part et d'autre de la structure avion, le bouclier reste engagé à fond dans l'ossature de l'avion. Par opposition, à haute altitude, lorsque l'ossature avant de l'avion se déforme, le bouclier rigide comporte des éléments métalliques, en pratique des doigts ou des pions, qui coulissent longitudinalement dans des réceptacles de l'ossature (ou réciproquement). Ce coulissement permet un maintien radial des doigts par rapport à un axe de coulissement de ces doigts. En conséquence, le bouclier possède, par rapport à l'ossature, un seul degré de liberté à l'endroit de chaque doigt, dans une seule direction. On réussit comme ça à obtenir les effets recherchés. Dans ce cas, le bouclier ne contribue plus à l'étanchéité qui est complètement assurée par ailleurs.

L'invention a donc pour objet un nez d'avion comportant un bouclier de protection situé en position intermédiaire d'une part entre une cabine où se tient le pilote, ou un compartiment critique de l'avion, et d'autre part un radôme de l'avion placé à l'avant de l'avion, caractérisé en ce que
- la cabine comporte une ossature avant de cabine,
- le bouclier est unique, monobloc, et rigide, et
- le bouclier rigide est monté flottant sur cette ossature avant.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une vue en coupe de face, et partiellement en transparence, du bouclier de l'invention monté sur un nez d'avion ;
- Figure 2 : une représentation en perspective du même bouclier ;
- Figures 3a à 3c : des représentations en coupe de détails du bouclier de l'invention.

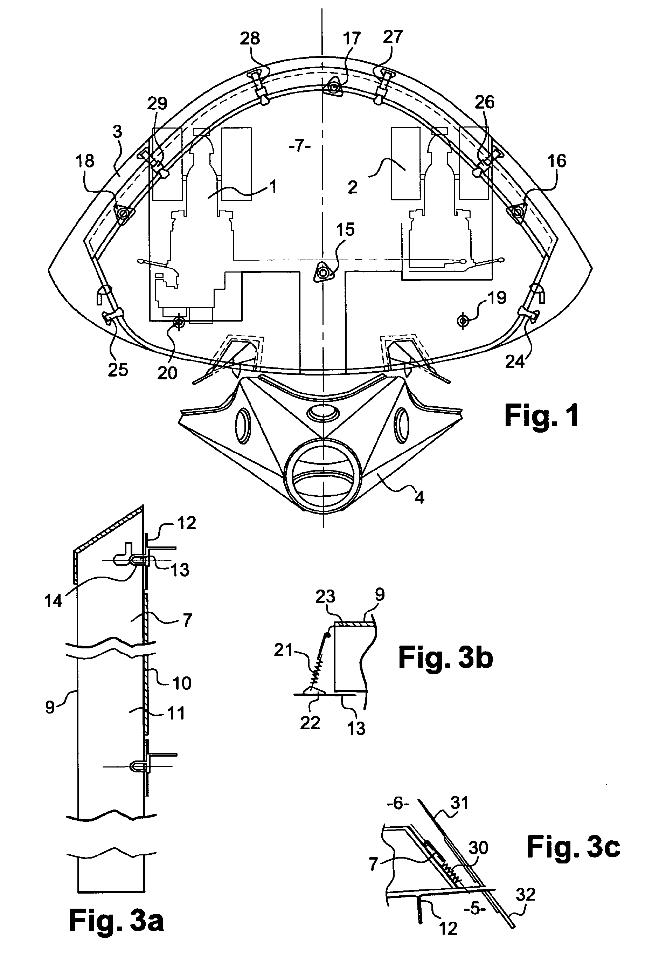

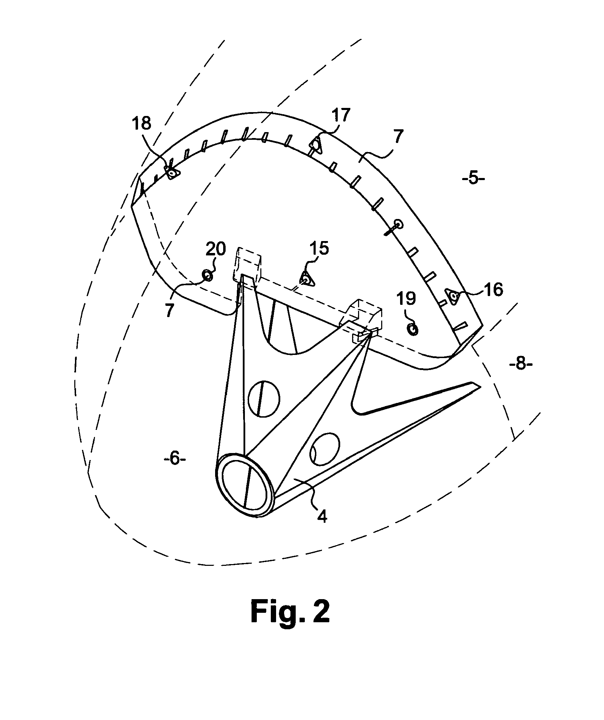

La figure 1 montre une partie d'un nez d'avion comportant un bouclier selon l'invention. Le nez d'avion proprement dit, est formé d'un bulbe avant, non représenté, qui se présente comme une demi-coque situé entre la figure 1 et l'observateur de la figure 1. En arrière de la figure 1, également non représenté, est située une cabine où se tient un pilote et dont on a suggéré les positions des sièges 1 et 2 de pilotage. Le fuselage 3 de l'avion détermine ainsi en partie haute une cabine et en partie basse, non représentée, une soute. En avant du bouclier dans le prolongement de la soute est située une console 4 fixée à l'ossature de l'avion. La console 4 est destinée à porter des équipements radars situés dans un radôme formant le bulbe. La figure 2 montre plus clairement une zone 5 de cabine séparée d'une zone 6 de radôme par le bouclier 7 de l'invention. Un compartiment critique 8 de l'avion se trouve sous la zone 5 de cabine. Le bouclier 7 peut avoir pour objet de protéger la zone 5 et/ou la zone 8 ou la zone 5 et partiellement la zone 8.

Figure 3a, le bouclier 7 est formé de préférence d'une plaque avant épaisse 9 en aluminium, d'une plaque arrière 10 fine en aluminium et, entre les deux, d'une âme en nid d'abeille 11. La rigidité générale peut encore être augmentée par un bordurage. Le bouclier tel qu'il est représenté a de grandes dimensions : son épaisseur est d'environ 118 mm et sa surface est d'environ 3 m². L'épaisseur de la plaque avant 9 est de préférence égale à 2,4 mm, celle de la plaque arrière 10 à 0,8 mm, alors que l'âme centrale en nid d'abeille, de faible densité, mesure de préférence 115 mm. La bordure périphérique peut être réalisée avec des mastics de remplissage et des produits d'étanchéité (polysulfure, silicone...). Le bouclier 7 est ainsi bien plus grand que les panneaux de bouclier de l'état de la technique dont la surface élémentaire était inférieure à 0,5 m²

Une ossature 12 de l'avion est représentée schématiquement figure 3a. Cette ossature 12 présente la particularité de se déformer au moment de la pressurisation de l'avion par rapport à l'air extérieur. Alors que le bouclier 7 est unique, monobloc et rigide, on a eu l'idée, dans l'invention, de le monter flottant sur l'ossature 12. Dans ce but, l'ossature 12 comporte des doigts ou des pions tels que 13 qui s'engagent dans des réceptacles 14 du bouclier 7, ou réciproquement. Un réceptacle 14 ne traverse de préférence pas le bouclier 7 de part en part. Sa profondeur est limitée à une valeur légèrement supérieure à la hauteur des doigts 13. Dans un exemple, les doigts 13 ont une hauteur de 20,5 mm et un diamètre de 6,35 mm. Les doigts 13 sont de préférence recouverts d'une couche de matériau élastique, d'élastomère ou de caoutchouc, dont l'épaisseur est de l'ordre de 5 mm. Eventuellement, les doigts 13 peuvent être montés sur le bouclier, et les réceptacles 14 montés sur l'ossature 12. De même, la couche amortissante du joint cylindrique en caoutchouc peut être placée à l'intérieur des réceptacles 14.

Lorsque l'ossature se déforme sous l'effet de la pressurisation, la course des doigts 13 à l'intérieur des réceptacles 14 est de l'ordre de 5,5 mm. Elle est bien inférieure à la longueur d'engagement des doigts 13 dans les réceptacles 14. De préférence, les liaisons entre ces deux éléments majeurs, l'ossature et le bouclier, comportent en partie centrale au moins trois doigts fixés à l'ossature et trois réceptacles fixés au bouclier. Ceux-ci retiennent latéralement et verticalement le bouclier à sa place.

Pour faciliter le montage de ce bouclier encombrant sur l'avant de l'ossature, on dispose d'un prépositionnement de chaque côté. Ce prépositionnement est réalisé par des éléments généraux de l'ossature de l'avion, par exemple des réservations en regard de piétements de la console 4. Pour le positionnement plus précis, de préférence, les doigts 13 ont une forme globalement en pointe. Ceci est par exemple obtenu en formant l'extrémité des doigts 13 proprement dits par une demi-sphère et en disposant la couche de caoutchouc d'amortissement légèrement en-dessous du diamètre principal de la sphère terminale des doigts. Dans l'exemple représenté figure 2, le bouclier 7 comporte ainsi quatre réceptacles 15 à 18, dont un central et trois périphériques, et éventuellement deux doigts 19 et 20 en partie basse.

Le bouclier 7 est par ailleurs maintenu sur l'ossature 12 par un jeu d'attaches élastiques. Ce jeu d'attaches comporte au moins, de préférence, trois ressorts reliant la face avant du blindage à l'ossature. Ce nombre de trois, par l'équilibrage des forces, maintient le bouclier en position. Pour éviter qu'il ne vibre, au cours du vol, on tire partie des joints de caoutchouc qui enrobent les doigts pour servir d'amortisseur par frottement dans les réceptacles. Par exemple, figure 3b, un ressort 21 est fixé d'une part par un ancrage 22 sur l'ossature 13 et d'autre part, par une patte 23 sur la plaque avant épaisse 9. Les attaches telles que 21 sont ici placées dans la position basse 24 et 25 du bouclier 7. Quatre autres attaches 26, 27, 28 et 29, montrées en coupe sur la figure 3c comportent un autre ressort 30 attaché, dans les mêmes conditions, d'une part, au bouclier 7, et d'autre part, à l'ossature 12. La figure 3c laisse apparaître, en coupe à son endroit, la surface externe 31 du radôme 6 et la surface externe 32 de la zone de cabine 5. A titre complémentaire, et pour éviter les phénomènes de décharges électrostatique, la plaque 9 et la plaque 10 sont reliées par une tresse métallique, montable de façon rapide sur la masse de l'avion.

Le fonctionnement de la liaison de flottement du bouclier est simple. Les efforts latéraux et verticaux sont repris par les doigts et les joints en caoutchouc. Les efforts axiaux résultant de la pressurisation de l'avion sont repris par les ressorts qui tendent à plaquer le bouclier 7 sur l'ossature 12. Lors de la mise en pression de la cellule, ou de toute autre sollicitation importante, la partie centrale du cadre se cambre vers l'avant et le blindage est poussé dans la même direction, et de la même quantité que ce cambrage. Les ressorts équilibrent le blindage dans sa nouvelle position imposée par les liaisons centrales doigt-élastomère. A ce titre, la liaison 15 située au centre du cadre sert de pivot. Ainsi donc, la structure 12 est sollicitée uniquement pour sa tenue aux efforts généraux de l'avion et le bouclier 7 reste fixé mais non contraint.

Le bouclier étant monobloc, il résiste parfaitement aux chocs d'oiseaux. Sa structure est particulièrement optimisée aux sollicitations naturelles de l'avion et fonctionne avec souplesse. Le principe de liaison permet donc la cohabitation entre un support souple, le cadre 12, et un blindage monobloc et très rigide. Tous les éléments de liaison facilitent un montage rapide. Le prépositionnement soulage les opérateurs du poids et du volume encombrant du blindage.

En variante, les liaisons par ressort en fil d'acier peuvent être remplacées par des grenouillères en élastomère. En variante également, la première tôle du blindage 9 peut avantageusement être remplacée par une tôle titane de faible épaisseur.

## Revendications

1. Nez d'avion comportant un bouclier (7) de protection situé en position intermédiaire d'une part entre une cabine (5) où se tient le pilote, ou un compartiment critique (8) de l'avion, et d'autre part un radôme (6) de l'avion placé à l'avant de l'avion, **caractérisé en ce que**
- la cabine comporte une ossature (12) avant de cabine,
- le bouclier est unique, monobloc, et rigide, et
- le bouclier rigide est monté flottant sur cette ossature avant.

2. Nez d'avion selon la revendication 1, **caractérisé en ce qu'**il comporte une ossature déformable de cabine et **en ce que** le bouclier rigide est monté avec un degré de liberté dans une direction par rapport à cette ossature.

3. Nez d'avion selon l'une des revendications 1 à 2, **caractérisé en ce qu'**il comporte, sur le bouclier et l'ossature, respectivement, un jeu de doigts (13) coopérant avec des réceptacles (14), ou réciproquement, et un jeu d'attaches (24-29) élastiques pour retenir le bouclier sur l'ossature.

4. Nez d'avion selon la revendication 3, **caractérisé en ce que** les doigts et ou les réceptacles sont recouverts d'une couche en un matériau élastique, par exemple un élastomère ou du caoutchouc.

5. Nez d'avion selon la revendication 4, **caractérisé en ce que** les doigts ont une extrémité en pointe, par exemple avec une demi-sphère.

6. Nez d'avion selon l'une des revendications 4 à 5, **caractérisé en ce que** la couche de matériau élastique a une épaisseur de 5 mm.

7. Nez d'avion selon l'une des revendications 3 à 6, **caractérisé en ce que** les doigts ont une largeur hors tout de 16,35 mm et une profondeur de 20,5 mm.

8. Nez d'avion selon l'une des revendications 1 à 7, **caractérisé en ce que** le bouclier est en matériau composite, ou en nid d'abeille, d'épaisseur environ 118 mm et de 3 m² environ.

9. Nez d'avion selon l'une des revendications 1 à 8, **caractérisé en ce que** le bouclier comporte une tresse pour être relié à une masse de l'avion.

## Claims

1. An aircraft nose comprising a protection shield located in an intermediate position between, firstly, a cabin in which the pilot is located, or a vital compartment of the aircraft, and secondly a radome of the aircraft placed in front of the aircraft, wherein:
- the cabin has a front cabin frame,
- the shield is unique, single-piece and rigid, and
- the rigid shield is float-mounted on this front frame.

2. An aircraft nose according to claim 1, comprising a deformable cabin frame, wherein the rigid shield is mounted with one degree of freedom in one direction relative to this frame.

3. An aircraft nose according to one of the claims 1 to 2, comprising, on the shield and frame respectively, a set of fingers working together with receptacles, or vice versa, and a set of elastic fasteners to hold the shield to the frame.

4. An aircraft nose according to claim 3, wherein the fingers and the receptacles are lined with a layer made of an elastic material, for example an elastomer or rubber.

5. An aircraft nose according to claim 4, wherein the fingers have a pointed end, for example with a semi-sphere.

6. An aircraft nose according to one of the claims 4 to 5, wherein the layer of elastic material has a thickness of 5 mm.

7. An aircraft nose according to one of the claims 3 to 6, wherein the fingers have an overall width of 16.35 mm and a depth of 20.5 mm.

8. An aircraft nose according to one of the claims 1 to 7, wherein the shield is made of composite material or in a honeycomb structure with a thickness of about 118 mm and a surface area of about 3 m².

9. An aircraft nose according to one of the claims 1 to 8, wherein the shield has a braid to be connected to an electrical ground of the aircraft.

## Patentansprüche

1. Flugzeugbug mit einer Abschirmung (7) zwischen einer Kabine (5), in der sich der Pilot befindet, oder einem kritischen Teil (8) des Flugzeugs und einer Radarkuppel (6) des Flugzeugs, die sich am vorderen Flugzeugteil befindet, **dadurch gekennzeichnet, dass**
- die Kabine ein vorderes Kabinentragwerk (12) besitzt,
- die Abschirmung aus einem einzigen Stück gefertigt und steif ist und
- die steife Abschirmung lose auf diesem vorderen Tragwerk montiert ist.

2. Flugzeugbug nach Anspruch 1, **dadurch gekennzeichnet, dass** er ein verformbares Kabinentragwerk besitzt und dass die steife Abschirmung mit einem Bewegungsgrad in eine Richtung zu diesem Tragwerk montiert ist.

3. Flugzeugbug nach einem der vorherigen Ansprüche, **dadurch gekennzeichnet, dass** er jeweils an der Abschirmung und am Tragwerk einen Satz Bolzen (13) besitzt, die mit den Aufnahmen (14) zusammenwirken oder umgekehrt, und einen Satz elastische Verbindungselemente (24-29), mit denen die Abschirmung am Tragwerk befestigt ist.

4. Flugzeugbug nach Anspruch 3, **dadurch gekennzeichnet, dass** die Bolzen und / oder Aufnahmen mit einer Schicht elastischem Werkstoff überzogen sind, z.B. Elastomer oder Gummi.

5. Flugzeugbug nach Anspruch 4, **dadurch gekennzeichnet, dass** die Bolzen ein spitz zulaufendes Ende haben, z.B. mit einer Halbkugel.

6. Flugzeugbug nach einem der vorherigen Ansprüche 4 bis 5, **dadurch gekennzeichnet, dass** die Schicht elastischer Werkstoff 5 mm dick ist.

7. Flugzeugbug nach einem der vorherigen Ansprüche 3 bis 6, **dadurch gekennzeichnet, dass** die Bolzen über alles gemessen 16,35 mm breit und 20,5 mm sind.

8. Flugzeugbug nach einem der vorherigen Ansprüche, **dadurch gekennzeichnet, dass** die Abschirmung aus Verbundmaterial oder einer Wabenstruktur besteht, die ungefähr 118 mm dick und 3 m² groß ist.

9. Flugzeugbug nach einem der vorherigen Ansprüche, **dadurch gekennzeichnet, dass** die Abschirmung ein Geflecht beinhaltet, um mit einer Flugzeugmasse verbunden zu werden.
